# EUROPEAN PATENT APPLICATION

(11) **EP 4 063 100 A1**
(43) Date of publication of application: **28.09.2022**
(21) Application number: 22161981.0
(22) Date of filing: 14.03.2022
(51) Int. Cl.: B29C 49/42, B29C 49/78, B29C 49/28

(54) **VALVE BLOCK FOR A BLOW MOULDING MACHINE**

(30) Priority: 17.03.2021 DE 102021106478
(71) Applicant: Norgren AG, 8370 Sirnach (CH)
(72) Inventor: STUDER, Roger, 8370 Sirnach (CH)
(74) Representative: Range, Christopher William

(57) **Abstract**

A valve block 1 for a stretch blow moulding machine is described. The valve block 1 has a housing 10 with cavity ports for supplying pressurised fluid to a mould cavity of a stretch blow moulding machine. The valve block 1 has a series of common ports with each common port supplying each of the cavities a different pressurised fluid. The valve block further comprises a number of process valves that are used to operatively supply the pressurised fluid from the common ports to the cavity port.

## Description

### TECHNICAL FIELD

The present disclosure relates to a valve block. Particularly, but not exclusively, the disclosure relates to valve block for a stretch blow moulding machine and a stretch blow moulding machine incorporating a valve block of the invention.

### BACKGROUND

The invention will be described with a focus on stretch-blow moulding (SBM) for the production of containers, such as bottles, from plastic preforms (parisons). However, it is also feasible to use the valve block described herein in applications such as extrusion-blow moulding (EBM) and injection blow moulding (IBM).

In typical SBM applications, such as linear stretch-blow moulding (LSBM), a valve block is used to provide both low and high pressure fluid such as clean dry air (CDA) to a preform located in a mould cavity. Valve blocks contain one or more process valves and pilot valves which control the timing and duration of pressurised fluid to the mould cavity. The preform can be expanded using the pressurised fluid in a controlled manner as a result.

It is normal for many valve blocks to be provided in an LSBM with each valve block feeding a single mould cavity. Such an arrangement may be bulky. Each valve block has a number of pilot valves, process valves and fluid inlet and outlet ports. Each of these component and port is a potential failure point.

The present invention provides a valve block that improves upon valve blocks known in the art.

### SUMMARY OF THE INVENTION

Aspects and embodiments of the invention provide a valve block, and a stretch blow moulding machine incorporating a valve block as claimed in the appended claims.

According to an aspect of the invention, there is provided a valve block for a stretch blow moulding machine. The valve block comprising: a housing with a first and second fluid circuit; N cavity ports; a first common port suitable for supplying pressurised air at a first pressure to the valve block; a second common port suitable for supplying pressurised air at a second pressure to the valve block; N pre-blow valves; at least one flow regulator valve; wherein the first common port, N cavities, the at least one flow regulator valve and N pre-blow valves are fluidly connectable to define the first fluid circuit; the second common port, at least two cavities and the at least N pre-blow valves are fluidly connectable to define the second fluid circuit; and wherein N is a number greater than or equal to 2.

Advantageously the valve block has common ports which feed a number of different cavities. A single common port can be provided for each pressure, e.g. first common port for P1 and a second common port for P2. Therefore there is a reduction in components that need to be provided. As a single common port is provided for P1 (for example) there only needs to be one fluid line attached to the valve block in order to serve all of the mould cavities a specific pressure. This is advantageous over known blocks which have a single P1 inlet for a single cavity outlet. The same is true for the other common fluid ports provided in the valve body.

The reduction of components reduces the chance of leaks at connection points. Multiple connection fluid ports means multiple points where a leak may occur, reducing the number of connection points therefore reduces the number of places a leak may occur. The result is an energy saving (due to reduce pressure loss), reduced down time to find leaks and increased safety as there are less points where high pressure fluid may leak from as compared to known systems that comprise many connection ports. Moreover, fewer fluid lines reduces the volume of dead air which will be lost each cycle, the result is a greener valve block.

A further advantage is that the use of a single common port for a fluid at a certain pressure reduces the number of fluid lines required within the valve block. Such a valve block is therefore more compact and space saving than using multiple blocks with each block feeding a single cavity or conversely a single block with multiple input ports for feeding multiple cavities.

A further advantage of the present invention is that due to the fewer number of components the valve block is simpler to control. Fewer components means a simpler cycle of process valves and pilot valves opening and closing. Advantageously this means that the cycle times can be synchronised by the user if required, for example synchronisation is an advantage where moulds of stretch blow mould machine are opened simultaneously. In such a stretch blow machine bottles (or other components) may be manufactured in tandem or lock step with each other. As such a simpler and more robust processing regimen is therefore available.

A further advantage of fewer components is that there are fewer potential failure points for the valve block.

A further advantage of fewer components is that the valve block is cheaper to manufacture, due to fewer components.

Preferably N is equal to any number in the range 2-100, preferably wherein N is equal to any number in the range 2-25, more preferably wherein N is equal to any number in the range 2-12.

Preferably N is equal to 2 or 4 or 6 or 8 or 10 or 12.

Preferably N is equal to 3 or 5 or 7 or 9 or 11.

Optionally, the pre-blow valves may be solenoid actuated.

Preferably the valve block further comprises a third common port suitable for supplying pressurised air at a third pressure (PAS) to the valve block and at least one pilot valve. The at least one pilot valve is operatively connected to the N pre-blow valves for operating the N pre-blow valves using the pressurised air at the third pressure (PAS) when the at least one pilot valve is in an actuated position.

Preferably the number of flow regulator valves is N. Advantageously each of the N pre-blow first pressure P1 fluid lines can be independently restricted.

Preferably the number of pilot valves is N wherein each pilot valve controls a single pre-blow valve. A single pilot valve controls a single pre-blow valve is advantageous as it allows each pre-blow valve to be controlled individually.

Preferably the second fluid circuit further comprises a process valve controlled by a pilot valve located between the second common port and the at least N pre-blow valves. Advantageously the second common port can be disconnected and connected from the second fluid circuit and the N pre-blow valves. Advantageously only a single process valve is required to connect and disconnect the second common port from all the N pre-blow valves. Preferably the second fluid circuit further comprises a common air recovery port. The common air recovery port is in fluid communication with the fluid circuit for recovering pressurised air. The common air recovery port is used to recycle spent air from a previous cycle.

Preferably the second fluid circuit further comprises a process valve controlled by a pilot valve located between the common air recover port and the N pre-blow valves. Advantageously the process valve is used to connect and disconnect the valve from second fluid circuit.

Preferably the valve block further comprises an exhaust for venting spent fluid. The exhaust may have a silencer.

Preferably the valve block further comprises at least one common intermediate port. The at least one common intermediate port is suitable for supplying pressurised air at an intermediate pressure PI to the valve block. The at least one common intermediate port is fluidly connected to the second fluid circuit. The intermediate pressure PI is greater than the first pressure P1 and less than the second pressure. Supplying a port supplying an intermediate pressure allows for greater control of the stretch blow moulding process.

Preferably the valve block further comprises a process valve controlled by a pilot valve located between the at least one common intermediate port and the N pre-blow valves. Advantageously the process valve is used to connect and disconnect the valve from the second fluid circuit.

The valve block may comprise multiple common intermediate ports each intermediate port supplying a pressurised fluid at different intermediate pressures, a first intermediate pressure P11, a second intermediate pressure PI2 to an nth intermediate pressure Pin where the intermediate pressures are greater than the first pressure and less than the second pressure. In such an embodiment each of the multiple common intermediate ports has a process valve and pilot valve. Any number of common intermediate pressure ports is conceivable, there may be two or three or four or five common intermediate pressure ports, or a range of common intermediate pressure ports of two to five or two to three. Supplying multiple ports at an intermediate pressure allows for greater control of the stretch blow moulding process.

Preferably the valve block further comprises at least N compensation valve ports. The compensation valve ports are to provide direct compensation to the mould.

Preferably the valve block further comprises N sensor ports disposed in the valve block. The sensor ports a suitable for connecting to N sensors. The N sensors are used to measure the pressure at the cavity ports and in the mould cavity.

Preferably the valve block housing is a single block. Advantageously providing all the components within a single block increases the compactness of the block.

Preferably the valve block housing comprises a main block and at least one modular block that is fluidly connected to the main block; wherein the main block comprises a portion of the first fluid circuit and a portion of the second fluid circuit; and wherein the at least one modular block comprise at least one further common port that is fluidly connected to the first or second fluid circuit in the main block.

Advantageously when the valve block is a modular block it may comprise a main block and one or more additional modular blocks. The modular nature provides the user the ability to add further functionality as and when required. For example adding an air recovery port and the process valve and pilot valve to obtain recovered air.

Advantageously as with the main block, the modular block may therefore have a further modular block attached to it and so on with a chain of modular blocks. The series of modular blocks may contain different components providing modularity and adaptability to the valve block.

Advantageously a valve block that is modular may be adapted to a specific processing routine and parameters. For example intermediate pressure common ports may be included that can be include in a processing regime when required for certain dimensions of bottles but then removed or replaced with alternative components in a separate modular block when different processing parameters are required.

In a second aspect of the invention the valve block is provided in a stretch blow moulding machine. The stretch blow moulding machine may be a linear stretch blow moulding machine.

### BRIEF DESCRIPTION OF THE DRAWINGS

One or more embodiments of the invention will now be described, by way of example only, with reference to the accompanying drawings, in which:
Figure 1 is a schematic diagram of a valve block which can be adapted to have different numbers of cavity ports;
Figure 2 is a schematic diagram of a valve block of Figure 1 with two cavity ports;
Figure 3 is a schematic diagram of a valve block of Figure 1 with five cavity ports.

### DETAILED DESCRIPTION

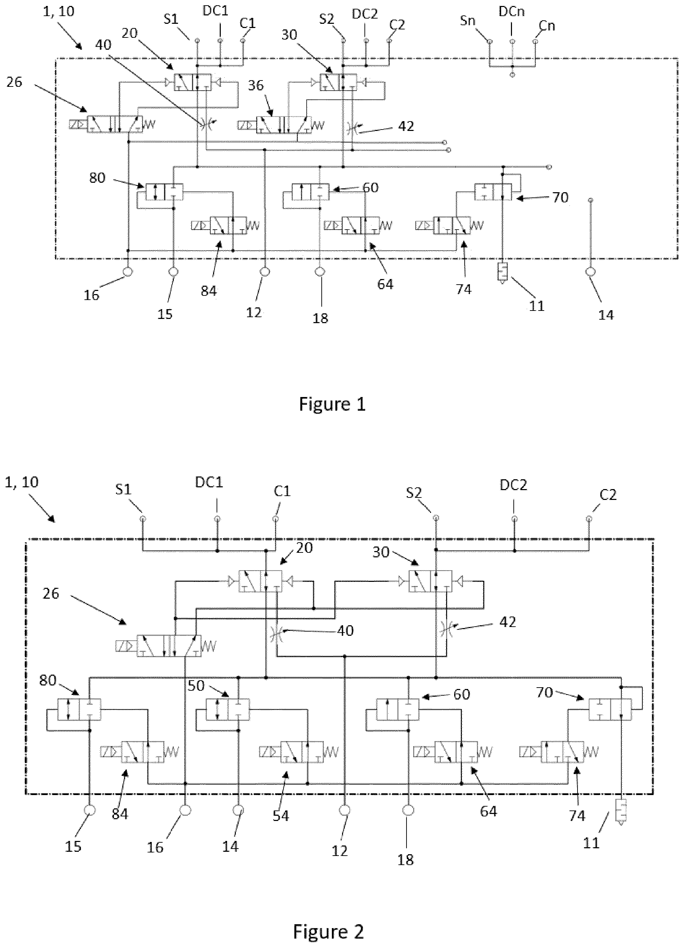

With reference to Figure 1 a first embodiment of the invention will herein be described. Figure 1 describes a valve block 1 with a housing 10, N number of cavity ports C1, C2, a first common port 12, a second common port 18, N number of pre-blow valves 20, 30, and at least one flow regulator valves 40, 42.

Preferably the housing 10 of the valve block is a single block. Optionally the housing 10 may be modular block comprising several blocks which fit together to define valve block 1.

The housing 10 is manufactured using methods and materials known in the art. For example using a metal such as steel that may be machined using known machining methods. The housing 10 may be manufactured using 3D printing using materials and methods known in the art.

The pilot valve is preferably an air actuated valve. In such an embodiment (as shown in Figure 1) the valve block 1 further comprises a third common port 16 and at least one pilot valve 26 that is operatively connected to actuate at least one or more the N pre-blow valves 20, 30. This embodiment will be described herein in further detail.

In alternative embodiments the pre-blow valves 20, 30 may be solenoid valves and therefore solenoid actuated to open and close, in such an embodiment the pilot valve 26 is not required to open and close the pre-blow valves 20, 30.

The housing 10 of valve block 1 contains the N number of cavity ports C1, C2, a first common port 12, a second common port 18, a third common port 16, N number of pre-blow valves 20, 30, at least one flow regulator valves 40, 42 and at least one pilot valve 26.

The first, second and third common ports 12, 18, 16 are suitable for supplying a pressurised fluid to the valve block 1. Said pressurised fluid may be clean dry air (CDA). The first, second and third common ports 12, 18, 16 may be threaded to enable connection to a fluid line with a suitable complementary attachment portion. In other embodiments alternative attachment mechanisms may be used known in the art.

The fluid line within the meaning of this specification may be straight, curvilinear, curved, linear, rectilinear, bent, or any other such shape known in the art suitable for transferring fluids. Preferably the fluid line shape is provided in a fashion within the valve block to allow for a compact valve block 1. The compact nature of the valve block 1 therefore reducing dead space within the valve block 1 and reducing pressure losses as a result.

The first common port 12 is a pressurised fluid port suitable for supplying pressurised fluid pressure to the valve block 1. The pressurised fluid is at a first pressurised fluid pressure P1. P1 is a high pressure fluid. The pressure of P1 is between 5-10 bar.

The second common port 18 is a pressurised fluid port suitable for supplying pressurised fluid pressure to the valve block 1. The pressurised fluid is at a second pressurised fluid pressure P2. P2 is a high pressure fluid. The pressure of P2 is between 6-40 bar.

The third common port 16 is a pressurised fluid port suitable for supplying pressurised fluid pressure to the valve block 1 from a plant air source (PAS) or pilot fluid source. The pressurised fluid is at a third pressurised fluid pressure PAS. PAS is a high pressure fluid. The pressure of PAS is between 6-10 bar. The third pressurised fluid is a pilot fluid which is used to actuate various valves within the valve block 1.

The pre-blow valves shown in Figure 1 are 3/2 valves. The valves in alternative embodiments may be 2/2 valves or 5/2 valves or any other suitable valve.

The housing 10 defines at least two fluid circuits. A first fluid circuit and a second fluid circuit. The fluid lines of the fluid circuits are represented in Figure 1 by the solid lines.

The first fluid circuit comprises the first common port 12, the N cavities C1, C2, the N pre-blow valves 20, 30 and the at least one flow regulator valves 40, 42. The at least one flow regulator valves 40, 42 are disposed between the first common port 12 and the N pre-blow valves. Optionally the number of flow regulator valves may be N. In such an embodiment the fluid line between the first common port 12 and the N flow regulator valves 40, 42 may branch into N fluid lines at one or more branch points where each fluid line feeds the N flow regulator valve 40, 42. The N pre-blow valves 20, 30 are disposed between the N flow regulator valves 40, 42 and the N cavities C1, C2. In such an embodiment a single flow regulator valve 40, 42 feeds a single pre-blow valve 20, 30.

N may be any number greater than or equal to 2. N may be equal to any number in the range 2-100, preferably N may be equal to any number in the range 2-25, more preferably N may be equal to any number in the range 2-12. Optionally N is equal to 2 or 4 or 6 or 8 or 10 or 12. Or optionally N is equal to 3 or 5 or 7 or 9 or 11.

The N flow regulator valves 40, 42 are suitably disposed to restrict or regulate the flow rate of the first pressurised fluid through the first circuit. The flow regulator valves 40, 42 may be any flow regulator valve known in the art.

A single operatively fluidly connected set of one of the N branched fluid lines, one of the N flow regulator valves 40, 42, one of the N pre-blow valves 20, 30 and one of the N cavities C1, C2 defines a sub-circuit of the first fluid circuit. There are N sub-circuits, each sub-circuit having at least one branched fluid line, at least one flow regulator valve 40, 42, at least one pre-blow valve 20, 30 and one cavity C1, C2.

The second fluid circuit comprises the second common port 18, the cavities C1, C2 and the N pre-blow valves 20, 30. The N pre-blow valves 20, 30 are disposed between the second common port 18 and the cavities C1, C2. The fluid line between the second common port 18 and the pre-blow valve may branch into N fluid lines at one or more branch points. Each of the N fluid lines feeds one of the N pre-blow valves 20, 30.

A single operatively fluidly connected set of one of the N branched fluid lines, one of the N pre-blow valves 20, 30 and one of the N cavities C1, C2 defines a sub-circuit of the second fluid circuit. There are N sub-circuits, each sub-circuit having at least one branched fluid line, at least one pre-blow valve 20, 30 and one cavity C1, C2.

The N pre-blow valve 20, 30 is operable to selectively fluidly connect the first common port 12 to the cavity C1, C2 in a first position and in a second position fluidly connect the second common port 18 to the cavity C1, C2.

The N pre-blow valves 20, 30 are controlled by at least one pilot valve. A single pilot valve 26 may control each of the pre-blow valves 20, 30 (this is shown in Figure 2). Optionally N pilot valves 26 may be present, in such an embodiment each of the N pilot valves 26 may control one of the N pre-blow valve 20, 30.

The at least one pilot valve 26 is connected to the third common port 16. The at least one pilot valve 26 is a spring loaded solenoid valve, in other embodiments other types of valves may be used known in the art.

The pilot valve 26 has a first and second position. The spring of the spring loaded solenoid pilot valve 26 is used to return the pilot valve 26 to the first position.

The pilot valve 26 has a first and second fluid line. The first fluid line is fluidly connected to a first side of the N pre-blow valve 20, 30. The second fluid line is fluidly connected to a second side of the N pre-blow valve 20, 30. In the first position the first fluid line is connected to the third common port 16. In the second position the second fluid line is connected to the third common port 16.

In the first position the shown in Figure 1 the pilot valve 26 is fluidly connected via the fluid line to a first side of the N pre-blow valve 20, 30. The pilot air, pressurised air PAS, pushes and keeps the pre-blow valve 20, 30 in the first position. In the first position the second fluid line connected to the second side is connected to a vent and optionally an exhaust.

In the second position (when the solenoid is activated, this position is not shown graphically but only described) the pilot valve 26 is fluidly connected via the fluid line to a second side of the N pre-blow valve 20, 30. This pushes and keeps the pre-blow valve 20, 30 in the second position. In the second position the first fluid line connected to the first side is connected to a vent and optionally an exhaust.

Optionally the second fluid circuit further comprises a process valve 50 controlled by a pilot valve 54 located between the second common port 18 and the at least N pre-blow valves 20, 30. Preferably the process valve 50 is located before the branch point of the second fluid circuit fluid line such that the process valve 50 can operatively connect and disconnect the second common port 18 from the rest of the second fluid circuit.

The pilot valve 54 is operatively fluidly connected to the third common port 16 and a first side of the process valve 50 suitably for providing fluid at the third pressure PAS to the first side of the process valve 50.

The pilot valve 54 may be a spring loaded solenoid valve with a first (unactuated) position and a second (actuated) position. In the first position, shown in Figure 1, the pilot valve 54 is fluidly connected to the first side of the process valve 50 such that the process valve 50 is normally closed and disconnected from the rest of the second fluid circuit. When the pilot valve 54 is in the second (actuated) position the fluid at the third pressure PAS is disconnected from the first side of the process valve and the process valve moves to an open position connecting the second common port 18 to the second fluid circuit.

The process valve 50 is moved to the open position by means of a fluid line connected to a second side that is fluidly connected to the second common fluid port 18. Once the fluid at pressure PAS is disconnected from the first side the process valve 50 is moved under the action of the fluid under pressure P2 acting on the second side of the process valve 50.

Optionally the valve block further comprises a sixth common port for exhaust 11. The exhaust 11 is fluidly connected to the second fluid circuit. The exhaust 11 is shown in Figure 1. The exhaust 11 has a process valve 70 that is operate using an exhaust pilot valve 74. The process valve 70 operably connects and disconnects the exhaust 11 from the second fluid circuit. The process valve 70 is normally open to ensure connection of the exhaust 11 to the second fluid circuit. The process valve 70 is operated by the exhaust pilot valve 74. Preferably the exhaust pilot valve is a spring returned solenoid valve in a normally closed position as shown in Figure 1. Actuating the solenoid of the exhaust pilot valve 74 causes the process valve 70 to close disconnecting the exhaust 11 from the second fluid circuit.

Optionally the valve block 1 may further comprise a fifth common port, common air recovery port 15. The common air recovery port 15 may be used to recover spent process fluid and recycling of the spend process fluid as, for example, pilot fluid. The common air recovery port 15 is fluidly connected to the second fluid circuit as shown in Figure 1.

Optionally the second fluid circuit further comprises a process valve 80 controlled by a pilot valve 84 located between the common air recovery port 15 and the at least N pre-blow valves 20, 30 as shown in Figure 2. Preferably the process valve 60 is located before the branch point of the second fluid circuit fluid line such that the process valve 80 can operatively connect and disconnect the common air recovery port 15 from the rest of the second fluid circuit.

The pilot valve 84 is operatively fluidly connected to the third common port 16 and a first side of the process valve 80 suitably for providing fluid at the third pressure PAS to the first side of the process valve 80.

The pilot valve 84 may be a spring loaded solenoid valve with a first (unactuated) position and a second (actuated) position. In the first position, shown in Figure 1, the pilot valve 84 is fluidly connected to the first side of the process valve 80 such that the process valve 80 is normally closed and disconnected from the rest of the second fluid circuit. When the pilot valve 84 is in the second (actuated) position the fluid at the third pressure PAS is disconnected from the first side of the process valve and the process valve moves to an open position connecting the common air recovery port 15 to the second fluid circuit.

Optionally the valve block 1 may further comprise at least one common intermediate port 14 as shown in Figure 2, the fourth common port 14. The common intermediate port 14 is suitable for providing fluid at an intermediate pressure PI. The intermediate pressure is greater than the first pressure P1 and less than the second pressure P2. P1 < PI < P2.

Optionally the second fluid circuit further comprises a process valve 50 controlled by a pilot valve 54 located between the common intermediate port 14 and the at least N pre-blow valves 20, 30. Preferably the process valve 50 is located before the branch point of the second fluid circuit fluid line such that the process valve 50 can operatively connect and disconnect the common intermediate port 14 from the rest of the second fluid circuit.

The pilot valve 54 is operatively fluidly connected to the third common port 16 and a first side of the process valve 50 suitably for providing fluid at the third pressure PAS to the first side of the process valve 50.

The pilot valve 54 may be a spring loaded solenoid valve with a first (unactuated) position and a second (actuated) position. In the first position, shown in Figure 1, the pilot valve 54 is fluidly connected to the first side of the process valve 50 such that the process valve 50 is normally closed and disconnected from the rest of the second fluid circuit. When the pilot valve 54 is in the second (actuated) position the fluid at the third pressure PAS is disconnected from the first side of the process valve and the process valve moves to an open position connecting the common intermediate port 14 to the second fluid circuit.

In a further embodiment the valve block 1 may comprise N direct compensation valve ports DC1, DC2, DCn. The direct compensation valve port DC1, DC2 is suitable for suppling pressurised are to the mould cavity to provide pressure compensation.

In a further embodiment the valve block 1 may incorporate N sensor ports S1, S2. The N sensor ports S1, S2, Sn are disposed in the valve block 1. The sensor ports S1, S2, Sn are suitable for providing pressurised fluid to N number of pressure sensors. The N sensors measure the pressure in each of the N cavity ports, wherein a single pressure sensor measures pressure in a single cavity.

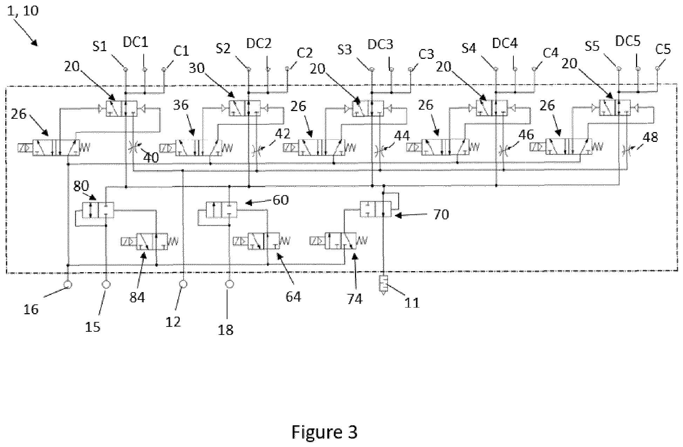

Further ports and sets of valves may be provided as indicated by the unconnected lines shown in Figure 1 and the unconnected port 14. These lines indicate how the valve block may be extended to incorporate any number of pilot valves 26, pre-blow valves 20, 30, cavities C1, C2,..., Cn, sensor ports S1, S2,..., Sn, direct compensation valve ports DC1, DC2,..., DCn, further common fluid ports Pn for fluid at an intermediate pressure PI or an alternative pressure, flow regulator valves 40, 42, 44, 46, 48. An example of such an implementation where N is equal to five is shown in Figure 3. In this specific embodiment there are five of each of the: cavities, direct compensation valve ports, sensor ports, pre-blow valves, pre-blow pilot valve (although in alternative embodiments a single pre-blow valve may be provided) and flow regulator valves. The relevant components in the valve block 1 of Figure 3 are fed by the common ports 12, 15, 16 and 18 as described above with respect to the first and second fluid circuits.

In one embodiment the valve block 1 is a single block comprising all the components of one of the above described embodiments, or a combination of the embodiments described above.

In a further embodiment the valve block 1 may be modular consisting of a main block and one or more modular blocks. The main block may comprise a portion of the first fluid circuit and a portion of the second fluid circuit; and wherein the at least one modular block comprise at least one further common port 14, 15 that is fluidly connected to the first or second fluid circuit in the main block.

Preferably the main block has a first common port 12, N cavities C1, C2, the at least one flow regulator valve 40, 42 and N pre-blow valves 20, 30 are fluidly connectable to define a portion of the first fluid circuit. Further the main block has the second common port 18, at least two cavities C1, C2 and the N pre-blow valves (20, 30) are fluidly connectable to define a portion of the second fluid circuit

Optionally the main block may further comprise the exhaust 11 connected to one or both of the first and second fluid circuits.

Preferably the main block may comprise all the base functions required for SBM.

Optionally one or more modular blocks may be added to the main block to provide further functionality required by the user. The modular blocks may contain any further components of any of the embodiments described above that are not incorporated into the main block. For example, but not limited to, the modular block may contain a fourth common port 14 for supplying pressurised fluid at the intermediate pressure PI and the process valve 50 and pilot valve 54 for operatively supplying the pressurised fluid PI. These components are fluidly connected to the portion of the second fluid circuit located in the main block. Therefore the second fluid circuit is extended between the main block and modular block.

The same modular block, or an additional modular block, or an alternative modular block may contain the fifth common port 15 for recovering pressurised air. The modular block in this instance also containing the air recovery process valve 80 and the air recovery process valve pilot valve 84. These components are fluidly connected to the portion of the second fluid circuit located in the main block. Therefore the second fluid circuit is extended between the main block and modular block. These components may optionally be connected to a portion of the first fluid circuit located in the main block.

The modular blocks may also contain further functionality known to the skilled person. For example, but not limited to, the modular blocks may contain measurement tools for in line diagnostics during processing, such as a temperature sensor or pressure sensor or other such sensor.

Further, the modular blocks may contain further components to enable more cavities to be supplied, the new cavity ports being part of the modular block.

The unconnected lines of the first and second circuits in the main block may be blocked (e.g. using plugs or other known stops or alternatively the wall may be solid with an indication of where to machine should the user wish to add a modular unit) until such a time where the user wishes to add additional functionality by the addition of a modular block. A further modular block may be attached to the valve block 1 and the fluid lines may be connected.

The further modular block may have an additional number of pre-blow valves, cavities, flow regulator valves (and other optional components as described above) as required by the user. The number may be 1 or 2 or 3 or 4 or 5 or 6 or 7 or 8 or 9 or 10. The number may be a range of 1-10 or 1-5 or 1-2. The modular block pre-blow valves may be actuated by the pre-blow pilot valves in the main block, or, the modular block pre-blow valves may be actuated by modular block pre-blow pilot valves in the modular block.

As with the main block, the modular block may have unconnected lines of the first and second fluid circuits which may be blocked as in a same manner as above. The modular block may therefore have a further modular block attached to it and so on with a chain of modular blocks.

In a further aspect of the invention (not graphically shown) the valve block 1 of any embodiment described above is incorporated into a stretch blow moulding machine.

In a further aspect of the invention (not graphically shown) comprises a kit of parts of the valve block 1 of any embodiment described. The kit of parts may be provided as separate components which can be combined to provide the valve block 1.

**Figure References Descriptions:**

| REFERENCE NUMBER | | DESCRIPTION |
|---|---|---|
| C1 | CAVITY | |
| C2 | CAVITY | |
| CN | CAVITY | |
| DC1 | DIRECT COMPENSATION | |
| DC2 | DIRECT COMPENSATION | |
| DCN | DIRECT COMPENSATION | |
| S1 | SENSOR | |
| S2 | SENSOR | |
| SN | SENSOR | |
| 1 | VALVE BLOCK | |
| 10 | HOUSING | |
| 11 | EXHAUST SIXTH COMMON PORT | |
| 12 | P1 SOURCE, FIRST COMMON PORT | |
| 14 | PI SOURCE, FOURTH COMMON PORT, UNCONNECTED PORT | |
| 15 | AIR RECOVERY, FIFTH COMMON PORT | |
| 16 | PLANT AIR SUPPLY / PILOT AIR, THIRD COMMON PORT | |
| 18 | P2 SOURCE, SECOND COMMON PORT | |
| 20 | PRE-BLOW VALVE | |
| 26 | PRE-BLOW PILOT VALVE | |
| 30 | PRE-BLOW VALVE | |
| 36 | PRE-BLOW PILOT VALVE | |
| 40 | FLOW REGULATOR | |
| 42 | FLOW REGULATOR | |
| 44 | FLOW REGULATOR | |
| 46 | FLOW REGULATOR | |
| 48 | FLOW REGULATOR | |
| 50 | PI PROCESS VALVE | |
| 54 | PI PILOT VALVE | |
| 60 | P2 PROCESS VALVE | |
| 64 | P2 PROCESS VALVE PILOT VALVE | |
| 70 | EXHAUST PROCESS VALVE | |
| 74 | EXHAUST PROCESS VALVE PILOT VALVE | |
| 80 | AIR RECOVERY PROCESS VALVE | |
| 84 | AIR RECOVERY PROCESS VALVE PILOT VALVE | |

## Claims

1. A valve block (1) for a stretch blow moulding machine comprising:
• a housing (10) with a first and second fluid circuit;
• N cavity ports (C1, C2);
• a first common port (12) suitable for supplying pressurised air at a first pressure (P1) to the valve block (1);
• a second common port (18) suitable for supplying pressurised air at a second pressure (P2) to the valve block (1);
• N pre-blow valves (20, 30);
• at least one flow regulator valve (40, 42);
wherein the first common port (12), N cavities (C1, C2, Cn), the at least one flow regulator valve (40, 42) and N pre-blow valves (20, 30) are fluidly connectable to define the first fluid circuit;
the second common port (18), at least two cavities (C1, C2, Cn) and the N pre-blow valves (20, 30) are fluidly connectable to define the second fluid circuit; and
wherein N is a number greater than or equal to 2.

2. The valve block (1) of claim 1, wherein N is equal to any number in the range 2-100, preferably wherein N is equal to any number in the range 2-25, more preferably wherein N is equal to any number in the range 2-12.

3. The valve block (1) of one of claim 1 or claim 2, wherein the valve block (1) further comprises a third common port (16) suitable for supplying pressurised air at a third pressure (PAS) to the valve block (1) and at least one pilot valve (26);
wherein the at least one pilot valve (26) is operatively connected to the N pre-blow valves (20, 30) for operating the N pre-blow valves (20, 30) using the pressurised air at the third pressure (PAS) when the at least one pilot valve (26) is in an actuated position.

4. The valve block (1) of claim 3 where the number of flow regulator valves (40, 42) is N; and/or wherein the number of pilot valves (26) is N wherein each pilot valve (26) controls a single pre-blow valve (20, 30).

5. The valve block (1) of claim any preceding claim wherein the second fluid circuit further comprises a process valve (60) controlled by a pilot valve (64) located between the second common port (14) and the N pre-blow valves (20, 30).

6. The valve block (1) of any preceding claim wherein the second fluid circuit further comprises a common air recovery port (15) that is in fluid communication with the second fluid circuit for recovering pressurised air.

7. The valve block (1) of claim 6 wherein the second fluid circuit further comprises a process valve (80) controlled by a pilot valve (84) located between the common air recovery port (15) and the N pre-blow valves (20, 30).

8. The valve block (1) of any preceding claim wherein the valve block (1) further comprises an exhaust (11) fluidly connected to the second fluid circuit.

9. The valve block (1) of any preceding claim wherein the valve block (1) further comprises at least one common intermediate port (14) suitable for supplying pressurised air at an intermediate pressure (PI) to the valve block; wherein the at least one common intermediate port (14) is fluidly connected to the second fluid circuit; and wherein the intermediate pressure (PI) is greater than the first pressure (P1) and less than the second pressure (P2).

10. The valve block (1) of claim 9 wherein the valve block (1) further comprises a process valve (50) controlled by a pilot valve (54) located between the at least one common intermediate port (14) and the at least N pre-blow valves (20, 30).

11. The valve block (1) of any preceding claim wherein the valve block (1) further comprises at least N compensation valve ports (DC1, DC2, DCn).

12. The valve block (1) of any preceding claim wherein the valve block (1) further comprises at least N sensor ports (S1, S2, Sn) disposed in the valve block (1) suitably for connecting to at least N sensors measuring pressure in the N cavity ports (C1, C2, Cn).

13. The valve block (1) of any preceding claim, wherein the housing (10) is a single block.

14. The valve block (1) of any claims 1 to 12, wherein the housing (10) comprises a main block and at least one modular block that is fluidly connected to the main block; wherein the main block comprises a portion of the first fluid circuit and a portion of the second fluid circuit; and wherein the at least one modular block comprise at least one further common port (14, 15) that is fluidly connected to the first or second fluid circuit in the main block.

15. A stretch blow moulding machine incorporating a valve block of any of claims 1 to 14.
